Europäisches Patentamt

European Patent Office

Office européen des brevets

(11) Veröffentlichungsnummer: **0 383 122 B1**

## (12) EUROPÄISCHE PATENTSCHRIFT

(45) Veröffentlichungstag der Patentschrift: **18.11.93**

(21) Anmeldenummer: **90102154.3**

(22) Anmeldetag: **03.02.90**

(51) Int. Cl.5: **C01G 1/08**, C01G 37/00, C01G 45/08, C01G 51/00, C01G 53/00

(54) **Verfahren zur Herstellung wässriger Metallnitratlösungen.**

(30) Priorität: **17.02.89 DE 3904836**

(43) Veröffentlichungstag der Anmeldung:
**22.08.90 Patentblatt 90/34**

(45) Bekanntmachung des Hinweises auf die Patenterteilung:
**18.11.93 Patentblatt 93/46**

(84) Benannte Vertragsstaaten:
**AT BE CH DE FR GB IT LI LU NL**

(56) Entgegenhaltungen:
**EP-A- 0 065 608**
**US-A- 2 053 518**

**CHEMICAL ABSTRACTS, Band 81, Nr. 26, 30. Dezember 1974, Seite 169, Zusammenfassung Nr. 172286m, Columbus, Ohio, US; N.M. DOROFEEVA et al.: "Nickel nitrate production", & KHIM. PROM-ST. (MOSCOW) 1974, (8)**

(73) Patentinhaber: **HOECHST AKTIENGESELL-SCHAFT**

**D-65926 Frankfurt(DE)**

(72) Erfinder: **Horn, Gerhardt, Dr. Dipl.-Chem.**
**Bunsenstrasse 19**
**D-4200 Oberhausen 11(DE)**
Erfinder: **Lohr, Jürgen, Dipl.-Ing.**
**Liboristrasse 45**
**D-4600 Dortmund 1(DE)**
Erfinder: **Moraw, Klaus, Dr., Dipl.-Ing.**
**Ufermannshof 30d**
**D-4220 Dinslaken(DE)**
Erfinder: **Materne, Winfried, Dipl.-Ing.**
**Osterfeldstrasse 26**
**D-5802 Wetter 4(DE)**

CHEMICAL ABSTRACTS, Band 76, Nr. 20, 15. Mai 1972, Seite 171, Zusammenfassung Nr. 15585f, Columbus, Ohio, US; A.I. FILIMONEN-KO et al.: "Nickel nitrate production", & KHIM. PROM. (MOSCOW) 1972, 48(2), 119-20

CHEMICAL ABSTRACTS, Band 105, Nr. 4, Juli 1986, Seite 439, Zusammenfassung Nr. 30805v, Columbus, Ohio, US; & PL-A-126 646 (UNIWERSYTET MARII CURIE-SKLODOWSKIEJ) 13-08-1983

**Beschreibung**

Die vorliegende Erfindung betrifft ein Verfahren zur Herstellung wäßriger Metallnitratlösungen, insbesondere von Nitraten der Elemente mit der Ordnungszahl 24 bis 28, durch Auflösen des Metalls in Salpetersäure. Bei der Umsetzung des Metalls mit Salpetersäure bilden sich infolge unkontrollierbarer Nebenreaktionen als unerwünschte Verunreinigung erhebliche Mengen Ammonnitrat.

Das Ammonnitrat kann von dem Metallnitrat nur durch eine aufwendige und kostspielige Reinigungsoperation, beispielsweise durch Kristallisation abgetrennt werden.

Man kann die Bildung von Ammonnitrat umgehen, indem man von einem Metalloxid oder Metallcarbonat ausgeht und dieses in Salpetersäure löst. Auf diese Weise erhält man zwar Metallnitratlösungen, die frei von Ammonnitrat sind, muß aber hinnehmen, daß die Ausgangsstoffe Metalloxid und Metallcarbonat im allgemeinen wesentlich teurer und von geringerer Reinheit als ein beispielsweise durch elektrolytische Abscheidung oder durch Zersetzung eines Metallcarbonyls gewonnenes Metall sind.

Man versetzt das aufzulösende Metall mit Salpetersäure. Ein stöchiometrischer Salpetersäureüberschuß begünstigt einerseits das Auflösen des Metalls und wirkt andererseits einer möglicherweise auftretenden Hydrolyse des in der wäßrigen Lösung bereits gebildeten Metallnitrats entgegen. Aus Gründen einfacher Handhabung soll die Salpetersäure eine Konzentration von 20 bis 65 Gew.-% aufweisen. Man kann das Metall mit einer entsprechend konzentrierten wäßrigen Salpetersäure behandeln oder eine höher konzentrierte Salpetersäure dem mit Wasser versetzten Metall zuleiten. Die Zugabe der Salpetersäure kann kontinuierlich oder diskontinuierlich erfolgen. Es ist möglich, die insgesamt erforderliche Salpetersäure auf einmal zuzusetzen. Mitunter ist es jedoch vorteilhaft, die Zugabe von Salpetersäure auf mehrere Portionen zu verteilen, um die Reaktion kontrolliert ablaufen zu lassen.

Die Salpetersäure wird üblicherweise im Überschuß bezogen auf aufzulösendes Metall eingesetzt. Da das Auflösen von Metall in stückiger Form bei Raumtemperatur sehr langsam verläuft, empfiehlt es sich bei erhöhten Temperaturen zu arbeiten. Dennoch erfordert das Auflösen insbesondere von Mangan, Chrom, Nickel und Kobalt selbst bei Temperaturen von 80°C und darüber einen erheblichen Zeitaufwand. Zwar kann das Auflösen durch Verwendung besonders feinteiligen Metalls erleichtert werden, jedoch liegt das im technischen Maßstab zu verarbeitende Metall meist nicht als Pulver, sondern in stückiger Form vor, so daß diese zeitsparende Arbeitsweise nicht genutzt werden kann.

Der Verwendung von feinteiligem Metall steht auch zum Beispiel durch Aufwirbeln verursachte Bildung von unerwünschtem Metallstaub entgegen. Aus diesem Grund wird dem Einsatz von größeren Metallpartikeln, wie Kügelchen, Granulat, Elektrodenabschnitten, Briketts oder Crowns der Vorzug gegeben.

Wegen der bei steigenden Temperaturen zunehmenden Reaktivität der Salpetersäure ist bei Durchführung der Reaktion auf die Beständigkeit des Reaktionsbehälters gegenüber Salpetersäure zu achten. Häufig setzt das Material des Reaktionsgefäßes einer Anwendung hoher Temperaturen Grenzen.

Nach einem in Russian Journal of Inorganic Chemistry 1959, 11, 1122 beschriebenen Verfahren zur Herstellung von Nickelnitrat wird empfohlen, die Bildung von Ammonnitrat durch Zusatz von 30 %igem Wasserstoffperoxid während des Auflösens von metallischem Nickel in Salpetersäure zu verhindern.

Bezogen auf Ammonnitrat werden mindestens stöchiometrische Mengen Wasserstoffperoxid benötigt. Da unter den Reaktionsbedingungen durch Zersetzung zusätzlich Wasserstoffperoxid in großem Umfange verbraucht wird, dürfte dieses Verfahren auch in Hinblick auf die nicht unproblematische Handhabung von 30 %igem Wasserstoffperoxid wirtschaftlich nicht akzeptabel sein.

Einer in Dorofeeva et al., Khim. Prom-st. (Moskau) 1974, (8), 603-6, (Chem. Abstracts 76, 172286m (1974)) veröffentlichten Arbeitsweise zufolge wird bei der Herstellung von Nickelnitrat die Bildung von Ammonnitrat durch Zusatz von metallischem Kupfer zu dem aufzulösenden Nickel oder durch Verwendung von kupferhaltigem Nickel (für das Auflösen in Salpetersäure) unterdrückt. Nachteilig ist, daß die erhaltene Nickelnitratlösung mit Kupfernitrat, das mittels separater Reinigungsschritte entfernt werden muß, verunreinigt ist.

Chem. Abstracts 76, 115585f, (1972) beschreibt die Herstellung von Nickelnitratlösungen, bei welcher durch die Lösung stickoxide und Luft geleitet wird um das gebildete Ammoniumnitrat zu zersetzen.

Aufgrund der vorangegangenen Erläuterungen besteht ein Bedarf nach einem Verfahren, das die vorstehend geschilderten Nachteile der bekannten Verfahren vermeidet, die Bildung von Ammonnitrat wirksam verhindert und zugleich den für das Auflösen des Metalls in der Salpetersäure erforderlichen Zeitaufwand deutlich verringert.

Gelöst wird diese Aufgabe durch ein Verfahren zur Herstellung von Nitraten eines Metalles der Ordnungszahl 24 bis 28 in wäßriger Lösung durch Auflösen des Metalles in Salpetersäure bei erhöhter Temperatur und gegebenenfalls unter erhöhtem Druck, dadurch gekennzeichnet, daß je g-Atom aufzulösendes Metall 0,2 bis 2 Mol salpetrige Säure oder in entsprechendem Maße eine salpetrige Säure bildende Substanz zu Beginn oder kontinuierlich oder diskontinuierlich während des Auflösens des Metalles zugesetzt wird.

Die Bildung von Ammonnitrat ist - wie in einer Vielzahl von Versuchen gezeigt werden kann - nur in geringem Umfange von den gewählten Reaktionsbedingungen abhängig. So beeinflußen Änderungen der Reaktionstemperatur, Variationen der Salpetersäurekonzentration und der Zugabegeschwindigkeit der Salpetersäure insbesondere beim Auflösen von Cobalt und Nickel die Bildung von Ammonnitrat nicht signifikant. Auch ein Zusatz von Sauerstoff führte zu keiner nennenswerten Verringerung der Ammonnitratbildung.

Dagegen wird überraschenderweise durch Zugabe von salpetriger Säure oder einer unter den Reaktionsbedingungen in engsprechendem Maße salpetrige Säure bildenden Substanz zu Beginn oder während des Auflösens des Metalls, insbesondere von Cobalt und Nickel die Entstehung von Ammonnitrat erheblich reduziert.

Es ist unter Anwendung der erfindungsgemäßen Arbeitsweise möglich, die Bildung von Ammonnitrat auf $\leq 10$, insbesondere $\leq 5$ bevorzugt $\leq 2,5$ Gew.-% bezogen auf gelöstes Metall zu begrenzen. Es können ohne große Schwierigkeiten Werte von 0,2 bis 0,1 Gew.-% Ammonnitrat bezogen auf gelöstes Metall erreicht werden.

Man setzt je g-Atom aufzulösendes Metall 0,2 bis 2 insbesondere 0,25 bis 1, bevorzugt 0,27 bis 0,8 Mol salpetrige Säure oder in entsprechendem Maße die salpetrige Säure bildende Substanz ein.

Man setzt die salpetrige Säure oder die salpetrige Säure bildende Substanz während des Auflösens des Metalles kontinuierlich oder diskontinuierlich zu. Man kann die salpetrige Säure oder die salpetrige Säure bildende Substanz zu Beginn des Auflösens des Metalles zusetzen, aber auch in mehreren gleich oder verschieden großen Portionen während des Auflösens zudosieren.

Üblicherweise überschichtet man das aufzulösende Metall entweder zu Beginn mit der gesamten Menge Salpetersäure oder fügt die Salpetersäure allmählich zu, wobei man das Metall auch zusammen mit Wasser vorlegen kann. Die salpetrige Säure oder salpetrige Säure bildende Substanz kann dem aufzulösenden Metall vor oder nach Zugabe der Salpetersäure zugesetzt werden. Es ist auch möglich, sie zusammen mit der Salpetersäure oder von dieser getrennt in die Umsetzung gleichmäßig oder portionsweise einzuleiten.

Als salpetrige Säure bildende Substanz kann ein Nitrit, beispielsweise ein Alkali- oder Erdalkalinitrit, $NO_2$, $N_2O_4$, $(NO + O_2)$, $(NO + NO_2)$ oder $N_2O_3$, insbesondere $NO_2$, $N_2O_4$, $(NO + O_2)$, $(NO + NO_2)$ oder $N_2O_3$, bevorzugt $NO_2$, $N_2O_4$ verwendet werden. Es ist jedoch auch möglich, Mischungen der vorstehend genannten Stoffe einzusetzen.

Als Metalle kommen Eisen, Chrom, Mangan, Kobalt oder Nickel, insbesondere Chrom, Mangan, Kobalt oder Nickel, bevorzugt Mangan, Kobalt oder Nickel, besonders bevorzugt Kobalt oder Nickel in Betracht. Die vorstehend genannten Metalle können auch in Mischung eingesetzt werden. Im allgemeinen ist es allerdings einfacher, die Metalle voneinander getrennt aufzulösen und anschließend die fertigen Metallnitratlösungen im gewünschten Verhältnis miteinander zu vermischen.

Das Metall wird in hochreiner Form, insbesondere in durch elektrolytische Abscheidung gewonnener Form eingesetzt. Man führt die Reaktion bei 50 bis 180, insbesondere 60 bis 150, bevorzugt 80 bis 125 °C durch. Da salpetrige Säure zum Zerfall neigt respektive die salpetrige Säure bildende Substanz möglicherweise gasförmig vorliegt, empfiehlt sich gegebenenfalls die Anwendung eines erhöhten Druckes. Drücke von 0,1 bis 10, insbesondere 0,2 bis 2, bevorzugt 0,3 bis 1 MPa sind ausreichend.

Je g-Äquivalent aufzulösendes Metall werden 0,5 bis 2,5, insbesondere 0,7 bis 2, bevorzugt 1,0 bis 1,6 Mol Salpetersäure eingesetzt.

Die nach dem erfindungsgemäßen Verfahren hergestellten Metallnitratlösungen lassen sich zur Herstellung von trägerfreien oder trägerhaltigen Katalysatoren verwenden. Sie eignen sich besonders zur Herstellung trägerfreier oder trägerhaltiger Hydrierkatalysatoren.

Die nachstehenden Beispiele beschreiben die Erfindung näher, ohne sie einzuschränken. Sie belegen, daß die Bildung von Ammonnitrat wirksam unterbunden und zugleich der für das Auflösen des Metalls in Salpetersäure erforderliche Zeitaufwand in hohem Maße herabgesetzt wird, wobei die Nachteile der bekannten Verfahren vermieden werden.


Experimenteller Teil:


Beispiel 1 bis 7

In einem mit einem Magnethub-Rührer versehenen Autoklaven (Volumen: 1 l) wird 30 Gew.-%ige Salpetersäure vorgelegt und bei Raumtemperatur Elektrodennickel zugegeben. Über eine mit einer Druckgasflasche verbundene Einleitungsvorrichtung wird flüssiges $N_2O_4$ als salpetrige Säure bildende Substanz in den Autoklaven eindosiert, der Autoklav wird danach geschlossen und unter Rühren mit einer Temperatursteigerung von 5°C pro Minute auf die Solltemperatur aufgeheizt. Nach Erreichen der Solltemperatur läßt man weiterreagieren. Während des Aufheizens und während der Reaktion baut sich im Autoklav ein Druck auf.

Nach Ablauf der vorgegebenen Reaktionszeit läßt man den Autoklav abkühlen, entspannt auf Normaldruck und entnimmt die gegebenenfalls noch ungelöstes Nickelmetall enthaltende wäßrige Nickelnitratlösung.

In der nachfolgenden Tabelle 1 sind die erforderlichen Mengen der Einsatzstoffe (30 Gew.-%ige Salpetersäure in ml, Elektrodennickel und $N_2O_4$ jeweils in Gramm), die Solltemperatur, die Reaktionszeit, der Druck und die Zusammensetzung der erhaltenen Nickelnitratlösung (Nickel-, Ammonnitratgehalt und Anteil ungelösten Nickels) zu entnehmen.

Vergleichsbeispiele A bis D

Es wird entsprechend der unter Beispiele 1 bis 7 beschriebenen Versuchsdurchführung gearbeitet, mit dem Unterschied, daß auf eine Zugabe von $N_2O_4$ als salpetrige Säure bildende Substanz verzichtet wird. Der in Vergleichsbeispiel B resultierende Druck geht auf den zusätzlichen Gebrauch von $O_2$ zurück.

Die Mengen der Einsatzstoffe, die Reaktionsbedingungen und die Zusammensetzung der erhaltenen Nickelnitratlösung sind in Tabelle 1 zusammengestellt.

Tabelle 1

| Beispiel: | Einsatzstoffe | | | Reaktionsbedingungen | | | Nickelnitratlösung | | |
|---|---|---|---|---|---|---|---|---|---|
| | HNO$_3$ (ml) | Ni (g) | N$_2$O$_4$ (g) | Temperatur (°C) | Zeit (Stunden) | Druck (MPa) | Nickel (g/l) | NH$_4$NO$_3$ (g/l) | ungelöstes Nickel (g) |
| 1 | 675 | 109,6 | 34 | 90 | 7 | 0,6 | 137,3 | <0,17 | 15,5 |
| 2 | 691 | 100,0 | 37 | 100 | 5 | 0,5 | 167,0 | <0,17 | 17,4 |
| 3 | 691 | 99,9 | 16 | 100 | 3 | 0,74 | 154,0 | 4,13 | 21,5 |
| 4 | 730 | 105,5 | 35 | 100 | 4 | 0,62 | 169,7 | <0,17 | 12,6 |
| 5 | 708 | 102,6 | 27 | 120 | 3 | 0,78 | 173,4 | <0,17 | 10,3 |
| 6 | 677 | 97,9 | 31 | 90 | 6 | 0,1 | 157,6 | 1,27 | 14,3 |
| 7 | 726 | 105,0 | 32 | 90 | 6 | 0,02 | 154,0 | 2,24 | 16,8 |
| A | 710 | 103,2 | – | 100 | 18 | 0,3 | 141,8 | 33,0 | 28,6 |
| B | 688 | 100,8 | – | 100 | 17 | 1,0 *) | 146,4 | 26,9 | 16,9 |
| C | 727 | 105,4 | – | 130 | 16 | 0,3 | 154,8 | 28,2 | 19,4 |
| D | 782 | 113,3 | – | 150 | 14 | 0,5 | 189,3 | 22,0 | 9,5 |

*) durch zusätzliches Aufpressen von O$_2$

Beispiele 8 bis 14

In einem mit einem Magnethub-Rührer versehenen Autoklaven (Volumen: 1 l) werden 58 Gew.-%ige Salpetersäure und Wasser vorgelegt und bei Raumtemperatur Elektrodennickel zugegeben. Man erhitzt auf 80°C und gibt hochkonzentrierte Salpetersäure (99 Gew.-%ig) zu. Die hochkonzentrierte Salpetersäure spaltet $NO_2$ ab. Die salpetrige Säure bildende Substanz ($NO_2$) wird in situ freigesetzt.

In den Beispielen 13 und 14 wird auf Verwendung von 58 Gew.-%iger Salpetersäure verzichtet, die Zugabe der 99 Gew.-%igen Salpetersäure erfolgt in das auf 80°C vorgeheizte Wasser-Nickel-Gemisch.

Der Autoklav wird geschlossen und unter Rühren mit einer Temperatursteigerung von 5°C pro Minute auf die Solltemperatur aufgeheizt. Nach Erreichen der Solltemperatur läßt man weiterreagieren. Während des Aufheizens und während der Reaktion baut sich im Autoklav ein Druck auf.

Nach Ablauf der vorgegebenen Reaktionszeit läßt man den Autoklav abkühlen, entspannt auf Normaldruck und entnimmt die gegebenenfalls noch ungelöstes Nickelmetall enthaltende wäßrige Nickelnitratlösung.

In der nachfolgenden Tabelle 2 sind die erforderlichen Mengen der Einsatzstoffe (58 Gew.-%ige Salpetersäure und Wasser je in ml, Elektrodennickel und hochkonzentrierte 99 Gew.-%ige Salpetersäure jeweils in Gramm), die Solltemperatur, die Reaktionszeit, der Druck und die Zusammensetzung der erhaltenen Nickelnitratlösung (Nickel-, Ammmonnitratgehalt und Anteil ungelösten Nickels) zu entnehmen.

Tabelle 2

| Beispiel: | Einsatzstoffe | | | | Reaktionsbedingungen | | | Nickelnitratlösung | | |
|---|---|---|---|---|---|---|---|---|---|---|
| | $HNO_3$ [1] (ml) | $H_2O$ (ml) | Ni (g) | $HNO_3$ [2] (g) | Temperatur (°C) | Zeit (Stunden) | Druck (MPa) | Nickel (g/l) | $NH_4NO_3$ (g/l) | ungelöstes Nickel (g) |
| 8 | 255 | 240 | 100,0 | 69,4 | 100 | 6 | 0,6 | 139,1 | 21,0 | 11,3 |
| 9 | 257 | 242 | 100,9 | 69,4 | 100 | 6 | 1,5* | 190,2 | 16,9 | 9,8 |
| 10 | 113 | 245 | 102,2 | 141,8 | 100 | 6,5 | 1,0* | 184,3 | 8,6 | 8,3 |
| 11 | 337 | 264 | 110 | 42,2 | 100 | 6 | 1,5* | 170,8 | 15,5 | 11,5 |
| 12 | 307 | 241 | 100,3 | 64,0 | 100 | 4 | 1,0* | 173,0 | 0,17 | 9,8 |
| 13 | - | 249 | 101,4 | 282,0 | 100 | 6 | 1,0* | 179,2 | 6,2 | 7,6 |
| 14 | - | 248 | 103,4 | 348,3 | 120 | 6 | 1,0* | 186,3 | 4,1 | 9,3 |

1) 58 Gew.-%ig
2) 99 Gew.-%ig
*) durch zusätzliches Aufpressen von $O_2$

Beispiele 15 bis 17

In einem mit einem Magnethub-Rührer versehenen Autoklaven (Volumen: 1 l) wird 30 Gew.-%ige Salpetersäure vorgelegt und bei Raumtemperatur reines Kobalt zugegeben. Über eine mit einer Druckgasflasche verbundene Einleitungsvorrichtung wird flüssiges $N_2O_4$ als salpetrige Säure bildende Substanz in

8

den Autoklaven eindosiert, der Autoklav wird danach geschlossen und unter Rühren mit einer Temperatursteigerung von 5°C pro Minute auf die Solltemperatur aufgeheizt. Nach Erreichen der Solltemperatur läßt man weiterreagieren. Während des Aufheizens und während der Reaktion baut sich im Autoklav ein Druck auf.

Nach Ablauf der vorgegebenen Reaktionszeit läßt man den Autoklav abkühlen, entspannt auf Normaldruck und entnimmt die gegebenenfalls noch ungelöstes Kobaltmetall enthaltende wäßrige Kobaltnitratlösung.

In der nachfolgenden Tabelle 3 sind die erfoderlichen Mengen der Einsatzstoffe (30 Gew.-%ige Salpetersäure in ml, Kobalt und $N_2O_4$ jeweils in Gramm), die Solltemperatur, die Reaktionszeit, der Druck und die Zusammensetzung der erhaltenen Kobaltnitratlösung (Kobalt-, Ammonnitratgehalt und Anteil ungelösten Kobalts) zu entnehmen.

Vergleichsbeispiele E und F

Es wird entsprechend der unter Beispiele 15 bis 17 beschriebenen Versuchsdurchführung gearbeitet, mit dem Unterschied, daß auf eine Zugabe von $N_2O_4$ als salpetrige Säure bildende Substanz verzichtet wird.

Die Mengen der Einsatzstoffe, die Reaktionsbedingungen und die Zusammensetzung der erhaltenen Kobaltnitratlösung sind in Tabelle 3 zusammengestellt.

Tabelle 3

| Beispiel: | Einsatzstoffe | | | Reaktionsbedingungen | | | Kobaltnitratlösung | | |
|---|---|---|---|---|---|---|---|---|---|
| | $HNO_3$ (ml) | Kobalt (g) | $N_2O_4$ (g) | Temperatur (°C) | Zeit (Stunden) | Druck (MPa) | Kobalt (g/l) | $NH_4NO_3$ (g/l) | ungelöstes Kobalt (g) |
| 15 | 708 | 102,3 | 35 | 100 | 8 | 0,6 | 168,6 | <0,17 | 14,3 |
| 16 | 734 | 105,8 | 33 | 100 | 6 | 0,5 | 172,2 | <0,17 | 11,5 |
| 17 | 676 | 109,8 | 33,5 | 120 | 5 | 0,9 | 183,0 | <0,17 | 9,8 |
| E | 690 | 100,2 | – | 100 | 19 | 0,3 | 143,3 | 33,0 | 22,3 |
| F | 710 | 103,5 | – | 120 | 16,5 | 0,4 | 146,4 | 32,0 | 19,6 |

Beispiel 18

400 ml einer durch Auflösen von Kobalt in Salpetersäure hergestellten wäßrigen Kobaltnitratlösung (Kobaltgehalt 36,6 g $\triangleq$ 91,5 g Kobalt/l; $NH_4NO_3$-Gehalt 7,44 g $\triangleq$ 18,6 g $NH_4NO_3$/l) werden in einem mit

10

einem Magnethub-Rührer versehenen Autoklaven (Volumen: 1 l) bei Raumtemperatur vorgelegt.

Über eine mit einer Druckgasflasche verbundene Einleitungsvorrichtung werden 23 g flüssiges $N_2O_4$ als salpetrige Säure bildende Substanz in den Autoklaven eindosiert, der Autoklav wird danach geschlossen und unter Rühren mit einer Temperatursteigerung von 5°C pro Minute auf 90°C aufgeheizt. Anschließend läßt man bei 90°C 7 Stunden weiterreagieren. Der Druck beträgt etwa 0,1 bis 0,2 MPa. Durch diese Behandlung wird der Ammonnitratgehalt von 18,6 auf 1,1 g $NH_4NO_3$/l herabgesetzt.

## Patentansprüche

1. Verfahren zur Herstellung von Nitraten eines Metalles der Ordnungszahl 24 bis 28 in wäßriger Lösung durch Auflösen des Metalles in Salpetersäure bei erhöhter Temperatur und gegebenenfalls unter erhöhtem Druck, dadurch gekennzeichnet, daß je g-Atom aufzulösendes Metall 0,2 bis 2 mol salpetrige Säure oder in entsprechendem Maße eine salpetrige Säure bildende Substanz zu Beginn oder kontinuierlich oder diskontinuierlich während des Auflösens des Metalles zugesetzt wird.

2. Verfahren nach Anspruch 1 dadurch gekennzeichnet, daß je g-Atom aufzulösendes Metall 0,25 bis 1 vorzugsweie 0,27 bis 0,8 mol salpetrige Säure oder in entsprechendem Maße eine salpetrige Säure bildende Substanz zugesetzt wird.

3. Verfahren nach Anspruch 1 oder 2, dadurch gekennzeichnet, daß als salpetrige Säure bildende Substanz ein Nitrit, $NO_2$, $N_2O_4$, $(NO + O_2)$, $(NO + NO_2)$ und/oder $N_2O_3$, insbesondere $NO_2$, $N_2O_4$, $(NO + O_2)$, $(NO + NO_2)$ und/oder $N_2O_3$ zugesetzt werden.

4. Verfahren nach einem oder mehreren der Ansprüche 1 bis 3, dadurch gekennzeichnet, daß als Metall Cr, Mn, Co und/oder Ni, insbesondere Co und/oder Nickel eingesetzt werden.

5. Verfahren nach einem oder mehreren der Ansprüche 1 bis 4, dadurch gekennzeichnet, daß man das Metall bei 50 bis 180°C und 0,1 bis 10 MPa auflöst.

6. Verfahren nach einem oder mehreren der Ansprüche 1 bis 5, dadurch gekennzeichnet, daß je g-Äquivalent Metall 0,5 bis 2,5 mol Salpetersäure eingesetzt werden.

## Claims

1. A process for preparing nitrates of a metal having an atomic number of 24 to 28 in aqueous solution by dissolving the metal in nitric acid at elevated temperature and, optionally, at elevated pressure, characterised in that 0.2 to 2 moles of nitrous acid or a substance forming a nitrous acid in a corresponding quantity are added per gramme-atom of metal to be dissolved either at the start, continuously or intermittently during the dissolution of the metal.

2. A process according to claim 1, characterised in that 0.25 to 1, preferably 0.27 to 0.8 moles of nitrous acid or a substance forming nitrous acid in a corresponding quantity are added per gramme-atom of metal to be dissolved.

3. A process according to claim 1 or 2, characterised in that a nitrite, $NO_2$, $N_2O_4$, $(NO + O_2)$, $(NO + NO_2)$ and/or $N_2O_3$, in particular $NO_2$, $N_2O_4$, $(NO + O_2)$, $(NO + NO_2)$ and/or $N_2O_3$ are added as the substance forming nitrous acid.

4. A process according to one or more of claims 1 to 3, characterised in that Cr, Mn, Co and/or Ni, in particular Co and/or Ni are used as the metal.

5. A process according to one or more of claims 1 to 4, characterised in that the metal is dissolved at 50 to 180°C and at 0.1 to 10 MPa.

6. A process according to one or more of claims 1 to 5, characterised in that 0.5 to 2.5 moles of nitric acid are used per gramme-equivalent of metal.

**Revendications**

1. Procédé de préparation de nitrates des métaux de numéro atomique 24 à 28, en solution aqueuse, par dissolution du métal dans l'acide nitrique à chaud et le cas échéant sous pression, ce procédé se caractérisant en ce que l'on ajoute au début de la dissolution du métal ou en continu ou en discontinu au cours de la dissolution du métal, pour un atome-gramme de métal à dissoudre, de 0,2 à 2 mol d'acide nitreux ou la quantité correspondante d'une substance formant de l'acide nitreux.

2. Procédé selon la revendication 1, caractérisé en ce que l'on ajoute, pour un atome-gramme de métal à dissoudre, de 0,25 à 1, de préférence de 0,27 à 0,8 mol d'acide nitreux ou la quantité correspondante d'une substance formant de l'acide nitreux.

3. Procédé selon la revendication 1 ou 2, caractérisé en ce que la substance formant de l'acide nitreux est un nitrite, $NO_2$, $N_2O_4$, $(NO + O_2)$, $(NO + NO_2)$, et/ou $N_2O_3$, plus spécialement $NO_2$, $N_2O_4$, $(NO + O_2)$, $(NO + NO_2)$ et/ou $N_2O_3$.

4. Procédé selon une ou plusieurs des revendications 1 à 3, caractérisé en ce que le métal mis en oeuvre est le chrome, le manganèse, le cobalt et/ou le nickel, plus spécialement le cobalt et/ou le nickel.

5. Procédé selon une ou plusieurs des revendications 1 à 4, caractérisé en ce que l'on dissout le métal à des températures de 50 à 180°C sous des pressions de 0,1 à 10 MPa.

6. Procédé selon une ou plusieurs des revendications 1 à 5, caractérisé en ce que l'on utilise de 0,5 à 2,5 mol d'acide nitrique par équivalent-gramme de métal.